# NEW EUROPEAN PATENT SPECIFICATION

(11) **EP 1 614 578 B2**
(45) Date of publication and mention of the opposition decision: **18.07.2018**
(45) Mention of the grant of the patent: 11.09.2013
(21) Application number: 05014887.3
(22) Date of filing: 08.07.2005
(51) Int. Cl.: B60K 31/04

(54) **After market electronic cruise control**
Nachrüstbarer, elektronischer Tempomat
Régulateur de vitesse électronique à rattrapage

(30) Priority: 09.07.2004 DE 202004010841 U
(43) Date of publication of application: 11.01.2006
(60) Divisional application: 10012790.1
(73) Proprietor: Lite-On Technology Corporation, Neihu Taipei 114 (TW)
(72) Inventor: Van der Kaay, O.K., Doetinchem (NL); Linneman, H.J.M., Zevenaar (NL); Kleij, M.A., Dulven (NL)
(74) Representative: Grosse Schumacher Knauer von Hirschhausen

(56) References cited:
- WO-A-2004/098941
- DE-A1- 10 201 160
- DE-A1- 19 947 313
- DE-U1-202004 010 841
- JP-B2- 2 524 599
- US-A- 5 400 865

## Description

### FIELD OF THE INVENTION

The present invention relates to an after market cruise control for motors, and more particularly to a cruise control for vehicles with a cruise control unit to produce control signals through an operating element by an operator. The accelerator, like a gas pedal, is mechanically operated by the driver and provided with an electronic signal output. A motor management system or the like uses the signals of said signal output to electronically steer the motor power control like the, throttle control of the engine for instance for the fuel supply to the combustion chamber of a combustion engine.

### DESCRIPTION OF RELATED ART

Currently, one solution of after market cruise control in vehicles is well-known as a mechanical connection between the accelerator pedal and the power control equipment (for example the throttle lever or the throttle valve). Specifically, the cruise control comprises a cruise speed control unit, an input unit for setting or inputting a desired cruise speed and a driving-equipment for controlling the accelerator pedal, especially in the form of a servo-motor and its necessary coupling. The cruise speed control unit controls the speed under the inputs from the driver through mechanical position of the accelerator pedal with help of the driving-equipment. It is noted that the position of the accelerator pedal is directly adjusted through the mechanical connection to the power control equipment to control the power of the motor.

After market cruise control is also known in vehicles with an electrical acceleration-control. The electrical acceleration-control comprises a motor management system and an throttle lever or pedal without direct mechanical connection between them. An accelerator-sensor is put on the accelerator pedal to detect the position of the accelerator pedal and gives an electrical signal to the motor management system. Then the motor management system regulates the speed through the power control equipment of the motor based on the signal coming from the accelerator sensor. These system types are called "drive-by-wire." The present invention relates to such a "drive-by-wire" system. An after market type of such cruise speed control system is obtainable. It also comprises a cruise speed control unit, an input unit for setting up the desired cruise speed and a driving-equipment for controlling the accelerator pedal, particularly in form of a servo-motor type, and its necessary mechanical coupling. The cruise speed control unit controls the speed based on the inputs from the driver through the mechanical position of the accelerator pedal with help from the input unit. The position of accelerator pedal is sensed and electrically given to the power control equipment to control the power of the motor.

If, in any of the current after market solutions, the cruise control is engaged, the gas pedal is moved physically by a power drive, like a servo motor, to achieve that the acceleration requirement from the driver will be done, while the driver is not touching the gas pedal. These mechanical solutions are large and, based on the available space in some cars, they are very difficult to build-in. Moreover, from a concept point of view the required servo motor and the mechanical couplings to the gas pedal of drive-by-wire vehicles should not be applied in these vehicles. Further said power drive mechanical couplings lead to some delay of reaction time.

DE 199 47 313 A discloses an after market cruise speed control for vehicles, which limits vehicle speed according to an upper or lower limit speed, and which comprises: a cruise speed control unit to provide electronic control signals for a desired speed given by an operation element that is set up by an operator to a desired cruise speed; a power control equipment of a propulsion motor, for example for supplying fuel to a combustion chamber of an internal combustion engine; and a mechanical accelerating transmitter to be operated by a driver, such as an accelerator pedal, providing an electric signal output, said output producing an output signal in dependence upon the position of the mechanical accelerating transmitter and a motor management system for processing output signals of the signal output, and for electrically driving the power control equipment, further comprising an interface unit that is inserted between the electric signal output of the accelerating transmitter and the motor management system the interface unit being connected to the cruise speed control unit and to the motor management system for transmitting the control signal of the cruise speed control unit to the motor management system in order to control the power control equipment, and wherein the output signal of the accelerator pedal is transmitted when the cruise control is in its switched off status and the signal is transmitted when the cruise control is in its switched on status.

The primary objective of the present invention is to provide an improved after market cruise control to overcome the drawbacks of current after market cruise control systems. The present invention according to claim 1 provides an improved cruise control structure to solve the aforementioned problems.

According to the subject invention - from now on referred to as retrofit cruise control - an interface gives the electronic control signal of the cruise control to engage for instance the throttle of the engine to be controlled, where the interface unit is located between a mechanically operated accelerator pedal with a electronic output signal and an electronic motor management and the interface unit is made in such a way that its output signal is shaped in such a way that it provides the steering signal of the cruise control or of the accelerator pedal or of a combination of the two. In one embodiment (not shown in the drawings), the cruise speed control unit or module and the interface unit or module may be combined in one housing.

By the invention a constant vehicle speed will be achieved by a completely electronic, fast reacting and reliable retrofit solution, without operating in the vehicle's or engine's dedicated motor control (Electronic Control Unit or Engine Management). The retrofit solution needs less parts and is also easier to install than current solutions, because no large mechanical installation is required. The required space is smaller and the location of installation is relatively free to choose. Also installation time is quite short. There is no mechanical wear.

The above-mentioned components and conditions to be used according to the invention, as well as those claimed and described in the examples of embodiments, are not subject to any special exceptional conditions, restrictions or limitations in size, shaping, material selection and technical conception, so that the selection criteria known in the field of application can be applied without any restriction or limitation.

Other objects, novel features, additional details, characteristics and advantages of the invention will become more apparent from the sub claims as well as from the following detailed description when taken in conjunction with the accompanying drawings in which, for the sake of example, embodiments according to the invention are illustrated.

### IN THE DRAWINGS

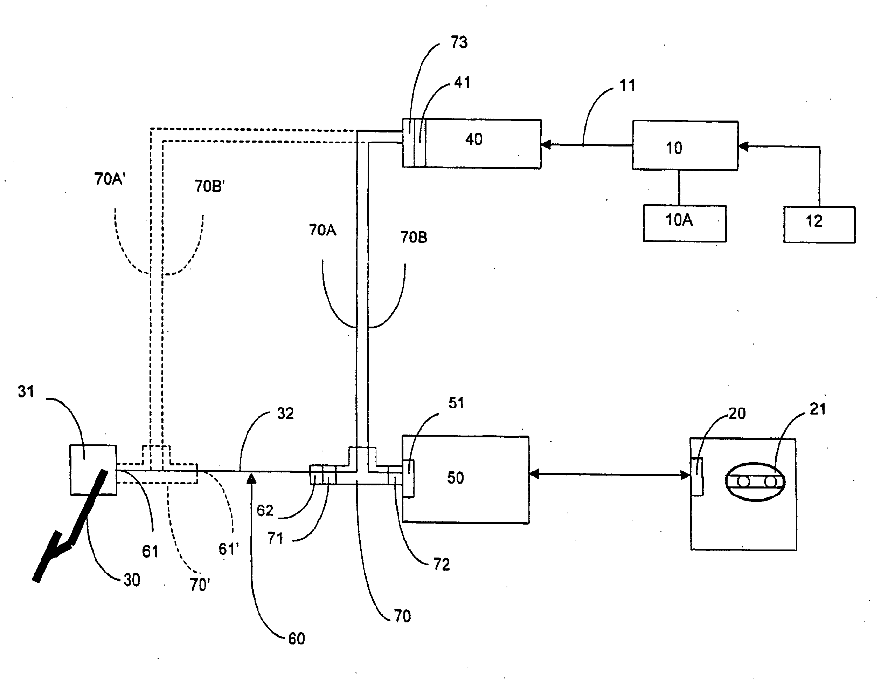

Fig. 1 is a block diagram of a cruise control in accordance with the present invention, wherein the cruise control is unified within a "drive-by-wire" system.

### DETAILED DESCRIPTION OF THE PREFERRED EMBODIMENT

With reference to Fig. 1, a "drive-by-wire" system includes an accelerating transmitter, as a rule in form of an accelerator pedal 30, a signal output (31), a motor management system (50) for a specific motor, and a power control equipment (20). For example, the system can be defined in cooperation with an internal combustion motor, an electrical motor, a fuel cell-motor or other propulsion motors (21), for instance for vehicles. Without the cruise control, an output signal (32) will be produced at the signal output (31) in dependence upon the position of accelerator pedal (30) that is operated by a driver, and will be subsequently transmitted to the motor management system (50). The motor management system (50) converts the output signal (32) and drives the power control equipment (20) over an, for the most part electric, connection to reach or maintain the speed desired by the driver. As a rule, the signal process mechanisms in the motor management system (50) are only known by authorized people, since the motor controls from automobile manufacturers provided for use with specific motor-performance-systems are so called "black-boxes." However, the output signal (32) of the signal output (31) is dependent on the position of the accelerator (30) and is well known therefore.

The cruise control in accordance with the present invention includes an interface unit (40), as well as the familiar cruise speed control unit (10) and an operation element (12) that is well-known as an input unit in different variants. By its help, the cruise control can provide for instance a given speed. The operation element (12) is mounted in the vehicle cabin near the steering wheel. The operation element (12) also can be mounted in the knob of the gearshift lever, to distract the concentration of a driver as little as possible.

The interface unit (40) is - process wise -located between the accelerator (30) and the motor management system (50) in a way that the signal output (31) is not directly connected to the motor management system (50), but instead with the interface unit (40), from where signals are transmitted to the motor management system (50). The cruise control unit (10) is connected to the interface unit (40) as well. The cruise control unit (10) is also connected (electrically or by radio, infra-red or the other wireless ways) to the operation element (12).

The connection between the signal output (31) of the accelerator pedal (30) and the motor management system (50) is made through a junction cable (60) that is (OEM wise) equipped with specific connectors (61, 62) at two ends thereof, for a given (OEM) specific motor or vehicle. For the purpose of easy assembly and universal application for the cruise control in accordance with the present invention, the electric intermediate connections of the interface unit (40) are made through additional junction cables (70A, B) having an attachment connector (70), which is, preferably, T-shaped. The attachment connector (70) is equipped at its T-shaped ends, with connectors (71, 72) which are specific for the motor or for the vehicle so that the intermediate connections of the junction cables (70A, 70B) can be connected problem-free between the accelerator pedal and the motor management system either to the signal output (31) of the accelerator (30) (as shown in dotted line) or the motor management system (50) (as shown in solid line). In the first case, the signal output (31) is connected electrically through attachment connector (70'), junction cables (70A', 70B'), connector socket or connector plug (73) and connector (41) to the interface unit (40). The connector (41) is part of the interface and independent a specific vehicle, so that the interface unit (40) is usable universally, and installation within a specific vehicle only requires connecting the junction cables (70A', B') by means of attachment connector (70'), which will be placed between the signal output (31) and the correspondent plug connector (61). In the other (second) case, the plug connection (62, 51) is detached, and the attachment connector (70) is plugged with its plug connectors (71, 72) between Connection ports (62) and (51). In both cases, the original junction cable (60) remains in its original position in the vehicle. Such T- or Y-shaped attachment connectors are of inventive meaning on there own. They may be even including electronic parts and in particular such electronical or non-electronical parts which provide an adaptation between an universal interface to certain vehicle brands, motor types, motor version or the like and/or to certain electronic signals between motor management and accelerator pedal or which adapt these signals to a universal interface.

With the cruise control in its switched off status, the interface unit (40) sends the output signal (32) from the signal output (31) to the motor management system (50), so maintaining the vehicles speed control according to the position of the accelerator pedal. If the cruise control is switched on through the operation element (12) and a speed is programmed (chosen), the interface unit (40) sends a signal to the motor management system (50), which is a control or switch signal (11) coming from the cruise control unit (10) or a mixed signal of the output signal (32) and the switch signal (11), which mixed signal is related to the position of the accelerator pedal. Therefore mechanical fixtures, for example a servo-motor for moving the accelerator (30), are not necessary. In addition, the interface unit (40) receives the signals from the signal output (31).

When the driver presses the accelerator pedal (30) down to increase the speed above the programmed speed of the cruise control, the interface unit (40) reacts, according to one of the embodiments of the invention, and sends a signal to the motor management system (50) to increase speed. The total process is carried out with the cruise control being switched on, as long as the increased speed is within given safety limits of the cruise control safety-function.

When the driver wants to drive at a programmed speed of the cruise control and does not want to operate the accelerator pedal (30), the interface unit (40) provides a signal to the motor management system (50) dependent on the switch signal (11). Since the signal is as a rule not constant because of different power demands on the motor (e.g. going uphill and downhill at a constant speed), the interface unit (40) has to "know" which mode of signal must be transmitted to the motor management system (50), to increase power to go uphill, for example. To maintain the universality, the present invention has advantageously proved that the interface unit (40) learns independently which mode is required and sends the necessary signal. In that case, it is possible that the output signal (32) coming from the signal output (31) is "known" by the interface unit (40). For that reason, a short learning phase is required to learn a rule, and a complete spectrum of all possible signal-outcomes will be transmitted to the interface unit (40) when the accelerator is pressed. Different learning modes may be programmed, in order to offer an efficient and reliable study tool. Any specific or new soft ware for the self learning or other features may be added during production or installation of the interface and/or its wiring or even after installation.

In addition to the foregoing feature, the interface unit (40) can be told or may include some information about the specific vehicle type/types so that the T-shaped interface cable for a specific vehicle will be "recognized". This would allow for conclusions with respect to the vehicle type and its steering systems, so all the information will be "known" by the interface unit (40). To make such recognition possible, the simplest way is to have more of multiple connecting pins than needed at the connector (41) of the interface unit (40) for transmitting of signals through the input and the output. By doing so, a "cable connection" accomplished over the junction cables (70A', B') is "specific" for a certain type of vehicle or motor and will be "recognized" by the interface unit (40). The pin structure of the attachment connector (73) that is also defined with more multiple connecting pins than being needed in the single case are then for a specific junction cable (70A,70B or 70A',70B'). Beyond this, more complex possibilities are also conceivable, especially through sensor controlled recognizing.

The cruise control in accordance with the present invention has other capabilities besides purely controlling speed, for example the safety functions of switching off or uncoupling the cruise control, for example when the brake or accelerator pedal is pressed, the switch-off operation at the operation element (12), the over-speed of the motor, the deceleration or acceleration of the vehicle within speed limits (for example from 75% to 150%) and the supervision and consideration of the ignition.

The operation element (12) also may have other helpful functions, for example working with a readable memory (10A), so that the programmed speeds which are allowed for different traffic zones (of a city or highway) or ground situations would be retrieved by pressing a button (memory function). The entire system effectively prevents speeding, as long as the function is on.

Consumers can combine the functions to meet their own needs.

In one embodiment (not shown in the drawings), the cruise speed control unit or module and the interface unit or module may be combined in one housing.

Even though numerous characteristics and advantages of the present invention have been set forth in the foregoing description, together with details of the structure and function of the invention, the disclosure is illustrative only. Those changes may be made in detail, especially in matters of shape, size, and arrangement of parts within the principles of the invention to the full extent indicated by the broad general meaning of the terms in which the appended claims are expressed.

### REFERENCE NUMBER LIST

- 10: cruise control unit
- 10A: readable memory
- 11: control signal
- 12: operation element
- 20: power control equipment
- 21: motor
- 30: accelerator pedal
- 31: signal output
- 32: output signal
- 40: interface unit
- 41: connector
- 50: motor management system
- 51: connector
- 60: junction cable
- 61: connector
- 62: connector
- 70: attachment connector
- 70': attachment connector
- 71: connector
- 72: connector
- 70A, B: junction cable
- 70A',B': junction cable
- 73: attachment connector

## Claims

1. After market cruise speed control system for driving motors and engines at a desired constant speed, more particularly for vehicles, which comprises:
a) a cruise speed control unit (10) to provide electronic control signals (11) for a desired speed given by an operation element (12) that is set up by an operator to a desired cruise speed;
b) a power control equipment (20) of a propulsion motor (21), for example for supplying fuel to a combustion chamber of an internal combustion engine; and
c) a mechanical accelerating transmitter to be operated by a driver, such as an accelerator pedal (30), providing an electric signal output (31), said output producing an output signal (32) in dependence upon the position of the mechanical accelerating transmitter and
d) a motor management system (50) for processing output signals (32) of the signal output (31), and for electrically driving the power control equipment (20).
e) further comprising an interface unit (40) that is inserted between the electric signal output (31) of the accelerating transmitter and the motor management system (50); the interface unit being connected to the cruise speed control unit (10) and to the motor management system (50), and
f) the interface unit (40) is so equipped that it transmits the output signal (32) when the cruise control is in its switched off status, and the control signal (11) and - if required - instead of the control signal (11) a combination signal of both signals to the motor management system (50) when the cruise control is in its switched on status.

2. The cruise speed control as claimed in claim 1, wherein the interface unit (40) learns on its own of the existing motor controls and adapts on its own to the output signal (32).

3. The cruise speed control as claimed in claim 1 or 2, wherein at switched on cruise speed control unit (10) the interface unit (40) permits a performance of the output signals (32) for demanding more engine power to the motor management system (50).

4. The cruise speed control as claimed in anyone of claims 1 to 3, wherein the interface unit (40) has a plug or a socket connector (41) with more multiple pin connections than being necessary for transmission of the output signals (32) to the motor management system (50) than necessary.

5. The cruise speed control as claimed in claim 4, wherein the connectors are specific for a motor type or a vehicle type.

6. The cruise speed control as claimed in anyone of the claims 1 to 5, wherein the plug or socket connector (41) of the interface unit (40) is electrically connected to an attachment connector (70) for a specific motor or vehicle by junction cables (70A, B), and wherein
the attachment connector (70) is in plug connection between the electric signal output (31) and a junction cable (60) to the motor management system (50), or wherein
the attachement connector (70) is in plug connection between a junction cable (60) to the electric signal output (31) and the motor management system (50) in order to electrically connect the signal output (31) on one end of the junction cable (60), and the motor management system (50) on the other end of the junction cable (60) to the interface unit (40).

7. The cruise speed control as claimed in claim 6, wherein the cabeling structure for adding the interface unit (40) is T-shaped.

8. The cruise speed control as claimed in claim 6 or 7, wherein the attachment connector (70) is T- or Y-shaped.

9. The cruise speed control as claimed in anyone of the claims 1 to 8, wherein a connector element between the interface unit and the accelerating transmitter and/or the motor management system in-cludes electronic parts and in particular such electronic or non-electronic parts which provide an adaptation between an universal interface to certain vehicle brands, motor types, motor version or the like and/or to certain electronic signals between motor management and accelerator transmitter or which adapt these signals to an universal interface.

10. The cruise speed control as claimed in anyone of the claims 1 to 9, wherein a readable memory (10A) is adjusted to at least one rated speed.

11. The cruise speed control as claimed in anyone of the claims 1 to 10, wherein the operation element (12) is located in a knob of a gear shift lever.

12. The cruise speed control as claimed in anyone of the claims 1 to 11, **characterized in that** it is self learning.

13. The cruise speed control as claimed in anyone of the claims 1 to 12, wherein any specific or new soft ware for self learning or other features are added or addable during production or installation of the interface and/or its wiring or even after installation.

14. The cruise speed control as claimed in anyone of the claims 1 to 13, wherein the cruise speed control unit or module and the interface unit or module are combined in one housing.

## Patentansprüche

1. Nachrüstbares Tempomatsystem zum Antreiben von Antrieben und Motoren mit einer gewünschten konstanten Geschwindigkeit, insbesondere für Fahrzeuge, Folgendes umfassend:
a) eine Tempomateinheit (10) zum Bereitstellen elektronischer Steuersignale (11) für eine gewünschte Geschwindigkeit, die durch ein Bedienungselement (12) gegeben sind, das von einem Bediener auf eine gewünschte Reisegeschwindigkeit eingestellt wurde,
b) ein Leistungssteuerungsgerät (20) eines Fahrmotors (21), zum Beispiel zum Zuführen von Kraftstoff in eine Brennkammer eines Verbrennungsmotors, und
c) ein mechanisches Beschleunigungsübertragungsgerät zum Bedienen durch einen Fahrer, wie beispielsweise ein Gaspedal (30), das einen elektronischen Signalausgang (31) bereitstellt, wobei der Ausgang ein Ausgangssignal (32) in Abhängigkeit von der Position des mechanischen Beschleunigungsübertragungsgerätes erzeugt, und
d) ein Antriebsmanagementsystem (50) zum Verarbeiten von Ausgangssignalen (32) des Signalausgangs (32) und zum elektrischen Antreiben des Leistungssteuerungsgerätes (20),
e) ferner eine Schnittstelleneinheit (40) umfassend, die zwischen dem elektrischen Signalausgang (31) des Beschleunigungsübertragungsgerätes und dem Antriebsmanagementsystem (50) eingefügt ist, wobei die Schnittstelleneinheit an die Tempomateinheit (10) und an das Antriebsmanagementsystem (50) angeschlossen ist, und
f) wobei die Schnittstelleneinheit (40) derart ausgestattet ist, dass sie an das Antriebsmanagementsystem (50) das Ausgangssignal (32) überträgt, wenn sich der Tempomat im ausgeschalteten Zustand befindet, und das Steuersignal (11) und - falls erforderlich - an Stelle des Steuersignals (11) ein Kombinationssignal aus beiden Signalen, wenn sich der Tempomat im angeschalteten Zustand befindet.

2. Tempomat nach Anspruch 1, wobei die Schnittstelleneinheit (40) die vorhandenen Antriebssteuerungselemente von allein lernt und sich von allein an die Ausgangssignale (32) anpasst.

3. Tempomat nach Anspruch 1 oder 2, wobei bei angeschalteter Tempomateinheit (10) die Schnittstelleneinheit (40) eine Ausführung der Ausgangssignale (32) zum Anfordern von mehr Motorleistung gegenüber dem Antriebsmanagementsystem (50) gestattet.

4. Tempomat nach einem der Ansprüche 1 bis 3, wobei die Schnittstelleneinheit (40) ein Stecker- oder Buchsenanschlussstück (41) mit mehr Mehrfachpinanschlüssen aufweist, als zur Übertragung der Ausgangssignale (32) an das Antriebsmanagementsystem (50) erforderlich sind.

5. Tempomat nach Anspruch 4, wobei die Anschlussstücke für eine Antriebsart oder einen Fahrzeugtyp spezifisch sind.

6. Tempomat nach einem der Ansprüche 1 bis 5, wobei das Stecker- oder Buchsenanschlussstück (41) der Schnittstelleneinheit (40) über Anschlusskabel (70A, B) elektrisch an ein Anbauanschlussstück (70) für einen spezifischen Antrieb oder ein spezifisches Fahrzeug angeschlossen ist, und wobei
das Anbauanschlussstück (70) per Stecker zwischen dem elektrischen Signalausgang (31) und einem Anschlusskabel (60) zum Antriebsmanagementsystem (50) angeschlossen ist oder wobei
das Anbauanschlussstück (70) per Stecker zwischen einem Anschlusskabel (60) zum elektrischen Signalausgang (60) und dem Antriebsmanagementsystem (50) angeschlossen ist,
um den Signalausgang (31) an einem Ende des Anschlusskabels (60) und das Antriebsmanagementsystem (50) am anderen Ende des Anschlusskabels (60) elektrisch an die Schnittstelleneinheit (40) anzuschließen.

7. Tempomat nach Anspruch 6, wobei die Verkabelungsstruktur zum Hinzufügen der Schnittstelleneinheit (40) T-förmig ist.

8. Tempomat nach Anspruch 6 oder 7, wobei das Anbauanschlussstück (70) T- oder Y-förmig ist.

9. Tempomat nach einem der Ansprüche 1 bis 8, wobei ein Anschlusselement zwischen der Schnittstelleneinheit und dem Beschleunigungsübertragungsgerät und/oder dem Antriebsmanagementsystem elektronische Teile und insbesondere solche elektronischen oder nichtelektronischen Teile beinhaltet, die eine Adaptation zwischen einer universellen Schnittstelle und bestimmten Fahrzeugmarken, Antriebsarten, Antriebsversionen oder dergleichen und/oder bestimmten elektronischen Signalen zwischen Antriebsmanagement und Beschleunigungsübertragungsgerät bereitstellen oder diese Signale für eine universelle Schnittstelle adaptieren.

10. Tempomat nach einem der Ansprüche 1 bis 9, wobei ein Lesespeicher (10A) an mindestens eine Nenndrehzahl angepasst ist.

11. Tempomat nach einem der Ansprüche 1 bis 10, wobei sich das Bedienungselement (12) in einem Knauf eines Gangschalthebels befindet.

12. Tempomat nach einem der Ansprüche 1 bis 11, **dadurch gekennzeichnet, dass** er selbstlernend ist.

13. Tempomat nach einem der Ansprüche 1 bis 12, wobei eine spezifische oder neue Software für das Selbstlernen oder andere Merkmale während der Herstellung oder Installation der Schnittstelle und/oder ihrer Verkabelung oder sogar nach der Installation hinzugefügt wird oder hinzufügbar ist.

14. Tempomat nach einem der Ansprüche 1 bis 13, wobei die Tempomateinheit oder das Tempomatmodul und die Schnittstelleneinheit oder das Schnittstellenmodul in einem Gehäuse kombiniert sind.

## Revendications

1. Système régulateur de vitesse d'après-marché pour moteurs d'entraînement, plus particulièrement pour véhicules, comprenant :
a) un régulateur de vitesse (10) pour fournir des signaux de commande électroniques (11) afin d'atteindre une vitesse désirée conférée par un déclencheur (12) configuré par un opérateur à une vitesse de croisière souhaitée ;
b) un dispositif de contrôle d'alimentation (20) d'un moteur à propulsion (21); par exemple pour alimenter en carburant une chambre de combustion d'un moteur à combustion interne ; et
c) un accélérateur mécanique à actionner par un conducteur par exemple une pédale d'accélérateur (30), fournissant une sortie de signal électrique (31), ladite sortie produisant un signal de sortie (32) en fonction de la position de l'accélérateur mécanique et
d) un système de gestion de moteur (50) pour traiter les signaux de sortie (32) de la sortie de signal (31) et destiné à transmettre électriquement le dispositif de contrôle d'alimentation (20),
e) comprenant en outre une interface (40) insérée entre la sortie de signal électrique (31) de l'accélérateur et le système de gestion de moteur (50), l'interface étant connectée au régulateur de vitesse (10) et au système de gestion de moteur (50), et
f) l'interface (40) est aménagé de façon à transmette le signal de sortie (32), lorsque le régulateur de vitesse est hors tension, et le signal de commande (11) et, si nécessaire au lieu du signal de commande (11) un signal de combinaison des deux signaux, au système de gestion de moteur (50) lorsque le régulateur de vitesse est sous tension.

2. Système régulateur de vitesse selon la revendication 1, dans lequel l'interface (40) reconnaît de lui-même les commandes de moteurs existantes et s'adapte au signal de sortie (32).

3. Système régulateur de vitesse selon la revendication 1 ou 2, dans lequel, lorsque le régulateur de vitesse (10) est sous tension, l'interface (40) permet une exécution des signaux de sortie (32) pour demander une puissance plus élevée au système de gestion de moteur (50).

4. Système régulateur de vitesse selon l'une quelconque des revendications 1 à 3, dans lequel l'interface (40) possède une prise ou un connecteur (41) connecté au système de gestion de moteur (50) plus que nécessaire.

5. Système régulateur de vitesse selon la revendication 4, dans lequel les connecteurs sont spécifiques à un type de moteur ou un type de véhicule.

6. Système régulateur de vitesse selon l'une quelconque des revendications 1 à 5, dans lequel la prise ou le connecteur (41) de l'interface (40) est connecté électriquement à un dispositif de fixation (70) d'un moteur ou d'un véhicule en particulier par des câbles de jonction, (70A, B), et dans lequel
le dispositif de fixation (70) se trouve dans le connecteur entre la sortie de signal électrique (31) et un câble de jonction (60) au système de gestion de moteur (50), ou dans lequel
le dispositif de fixation (70) se trouve dans le connecteur entre un câble de jonction (60) à la sortie de signal électrique (31) et le système de gestion de moteur (50)
afin de relier électriquement la sortie de signal (31) à une extrémité du câble de jonction (60) et le système de gestion de moteur (50) à l'autre extrémité du câble de jonction (60) à l'interface (40).

7. Système régulateur de vitesse selon la revendication 6, dans lequel la structure d'ajout de l'interface (40) est en forme de T.

8. Système régulateur de vitesse selon la revendication 6 ou 7, dans lequel le dispositif d'attache (70) est en forme de T ou de Y.

9. Système régulateur de vitesse selon l'une quelconque des revendications 1 à 8, dans lequel un élément de connexion entre l'interface et les pièces électroniques ou non électroniques particulières d'accélération permettent une adaptation entre une interface universelle pour certaines marques de véhicules, certains types d'automobiles, certains types de moteur ou assimilés et / ou pour certains signaux électroniques entre le système de gestion de moteur et l'émetteur de l'accélérateur ou qui adaptent ces signaux à une interface universelle.

10. Système régulateur de vitesse selon l'une quelconque des revendications 1 à 9, dans lequel une mémoire lisible (10A) est ajustée à au moins une vitesse nominale.

11. Système régulateur de vitesse selon l'une quelconque des revendications 1 à 10, dans lequel le déclencheur (12) est situé dans une poignée d'un levier de changement de vitesse.

12. Système régulateur de vitesse selon l'une quelconque des revendications 1 à 11, **caractérisé par le fait qu'**on peut apprendre à l'utiliser en autodidacte.

13. Système régulateur de vitesse selon l'une quelconque des revendications 1 à 12, où tout logiciel spécifique ou nouveau pour un apprentissage en autodidacte ou d'autres fonctionnalités sont ajoutés ou ajoutables pendant la production ou l'installation de l'interface et / ou son branchement, ou même après l'installation.

14. Système régulateur de vitesse selon l'une quelconque des revendications 1 à 13, dans lequel le régulateur de vitesse et l'interface sont assemblés dans un même boîtier.
